# EUROPEAN PATENT APPLICATION

(11) **EP 4 578 682 A1**
(43) Date of publication of application: **02.07.2025**
(21) Application number: 23945618.9
(22) Date of filing: 26.10.2023
(51) Int. Cl.: B60K 6/20, B60K 6/405, B60K 11/02, F16H 57/04, B60R 17/00

(54) **COOLING AND LUBRICATING SYSTEM FOR HYBRID POWERTRAIN**

(30) Priority: 18.07.2023 CN 202310880043
(71) Applicant: Jing-Jin Electric Technologies Co., Ltd, Beijing 100023 (CN)
(72) Inventor: CHEN, Zhengguang, Beijing 100023 (CN); LI, Jianwen, Beijing 100023 (CN); LIU, Xia, Beijing 100023 (CN)
(74) Representative: Schwarz & Partner Patentanwälte GmbH
(86) International application number: PCT/CN2023/126712
(87) International publication number: WO 2025/015737

(57) **Abstract**

A cooling and lubrication system for a hybrid powertrain is disclosed. The cooling and lubrication system comprises a water cooling module and an oil cooling module. The water cooling module comprises a water inlet nozzle (1), a first water passage (2), a second water passage (3), an oil cooler (4) and a water outlet nozzle (5) connected in sequence. The first water passage (2) is arranged on a housing of the drive motor, and the second water passage (3) is arranged on a housing of the reducer. The oil cooling module comprises an oil pump (6), a first oil delivery passage, a second oil delivery passage, a third oil delivery passage, a first oil return passage and a second oil return passage. An oil inlet of the oil pump (6) is communicated with a bottom of the housing of the reducer, and an oil outlet of the oil pump (6) is communicated with the oil cooler (4). The lubricating oil in the oil cooler (4) is delivered into the housing of the reducer, the housing of the drive motor and the housing of the range extender respectively via the first oil delivery passage, the second oil delivery passage and the third oil delivery passage. The first oil return passage is arranged at the bottom of the housing of the drive motor, and the second oil return passage is arranged at the bottom of the housing of the range extender. The cooling and lubrication system uses an integrated cooling and lubrication means, which makes the structure of the hybrid powertrain more compact and the cooling and lubrication efficiency higher.

## Description

### Cross-reference to related applications

This application claims priority to the Chinese patent application No. 202310880043.2 filed with the Chinese Patent Office on July 18, 2023 and entitled "Cooling and Lubricating System for Hybrid Powertrain", which is incorporated by reference herein in its entirety.

### TECHNICAL FIELD

The present disclosure belongs to the technical field of hybrid power system, and specifically relates to a cooling and lubrication system for a hybrid powertrain.

### BACKGROUND

With the rapid development of new energy vehicles, hybrid power systems have become one of the effective measures to make up for the insufficient battery life and ease the range anxiety. When the battery is low, the generator in the hybrid power system converts fuel into electrical energy and supplies it to the drive motor, and the drive motor provides power output for the vehicle. Since the operation of the motor in the hybrid power system generates a lot of heat energy, if the heat cannot be effectively dissipated, it may cause the motor to burn out. As the cooling and lubrication system can provide better lubrication, cooling and heat dissipation for the hybrid power system, it has become one of key factors in improving the power performance of the entire hybrid power system.

Most conventional hybrid power systems use water cooling to cool down the system by taking advantage of the high specific heat capacity of water. Although the cost is low, the water passage structure must be arranged on the housing structure of the hybrid power system, and the components inside the hybrid power system cannot be directly cooled down, resulting in low heat dissipation efficiency of these components. In addition, a few hybrid power systems use oil cooling to cool down the system. Although the components inside the hybrid power system can be directly cooled and lubricated, the specific heat capacity of the lubricating oil is much smaller than that of water, so the oil cooling design requires more lubricating oil, resulting in increase of costs.

### SUMMARY

In view of the above problems, the present disclosure discloses a cooling and lubrication system for a hybrid powertrain to overcome or at least partially solve the above problems.

In order to achieve the above object, the present disclosure adopts the following technical solutions.

An aspect of the present disclosure provides a cooling and lubrication system for a hybrid powertrain, wherein
the hybrid powertrain comprises a drive motor, a reducer and a range extender;
the cooling and lubrication system comprises a water cooling module and an oil cooling module;
the water cooling module comprises a water inlet nozzle, a first water passage, a second water passage, an oil cooler and a water outlet nozzle connected in sequence, the first water passage is arranged on a housing of the drive motor, and the second water passage is arranged on a housing of the reducer;
the oil cooling module comprises an oil pump, a first oil delivery passage, a second oil delivery passage, a third oil delivery passage, a first oil return passage and a second oil return passage, an oil inlet of the oil pump is communicated with a bottom of the housing of the reducer, an oil outlet of the oil pump is communicated with the oil cooler, the lubricating oil in the oil cooler is delivered into the housing of the reducer, the housing of the drive motor and the housing of the range extender respectively via the first oil delivery passage, the second oil delivery passage and the third oil delivery passage, the first oil return passage is arranged at the bottom of the housing of the drive motor, and the second oil return passage is arranged at the bottom of the housing of the range extender.

Further, the first oil delivery passage comprises a first main oil passage, a first branch oil passage, a second branch oil passage and a third branch oil passage;
an oil inlet end of the first main oil passage is communicated with the oil cooler, an oil outlet end of the first main oil passage is communicated with the first branch oil passage, the second branch oil passage and the third branch oil passage respectively, the lubricating oil is delivered to a first bearing journal and a second bearing journal in the housing of the reducer via the first branch oil passage, the lubricating oil is delivered to a third bearing journal and a fourth bearing journal in the housing of the reducer via the second branch oil passage, and the lubricating oil is delivered to the fifth bearing journal and the sixth bearing journal in the housing of the reducer via the third branch oil passage.

Further, an oil outlet hole of the first branch oil passage is arranged above the first branch bearing journal, the second bearing journal is arranged below the first bearing journal, and the first bearing journal and the second bearing journal are communicated via a first oil guide groove;
an oil outlet hole of the third branch oil passage is arranged above the fifth bearing journal, the sixth bearing journal is arranged below the fifth bearing journal, and the fifth bearing journal and the sixth bearing journal are communicated via a second oil guide groove.

Further, an oil collecting groove is arranged above the third bearing journal and the fourth bearing journal, and the oil collecting groove is are respectively communicated with the third bearing journal and the fourth bearing journal via the connecting oil passage, and the oil outlet hole of the second branch oil passage is arranged above the oil collecting groove.

Further, the second oil delivery passage comprises a second main oil passage, a fourth branch oil passage and a fifth branch oil passage;
an oil inlet end of the second main oil passage is communicated with an oil outlet end of the first main oil passage, an oil outlet end of the second main oil passage is communicated with the fourth branch oil passage and the fifth branch oil passage respectively, the lubricating oil is delivered to the seventh bearing journal in the housing of the drive motor via the fourth branch oil passage, and the lubricating oil is delivered to the stator assembly of the drive motor via the fifth branch oil passage.

Further, the fourth branch oil passage and the fifth branch oil passage are both arc-shaped structures, an oil outlet hole of the fourth branch oil passage and an oil outlet hole of the fifth branch oil passage are both arranged in a ring shape, an oil outlet hole of the fourth branch oil passage is arranged above the seventh bearing journal, an oil outlet hole of the fifth branch oil passage is arranged above the stator assembly of the drive motor, and a first oil distribution ring is provided between the oil outlet hole of the fifth branch oil passage and the stator assembly of the drive motor.

Further, the third oil delivery passage comprises a third main oil passage, a sixth branch oil passage and a seventh branch oil passage;
an oil inlet end of the third main oil passage is communicated with an oil outlet end of the first main oil passage, an oil outlet end of the third main oil passage is communicated with the sixth branch oil passage and the seventh branch oil passage respectively, the lubricating oil is delivered to the eighth bearing journal in the housing of the range extender via the sixth branch oil passage, and the lubricating oil is delivered to the stator assembly of the range extender via the seventh branch oil passage.

Further, the sixth branch oil passage and the seventh branch oil passage are both arc-shaped structures, an oil outlet hole of the sixth branch oil passage and an oil outlet hole of the seventh branch oil passage are both arranged in a ring shape, the oil outlet hole of the sixth branch oil passage is arranged above the eighth bearing journal, the oil outlet hole of the seventh branch oil passage is arranged above the stator assembly of the range extender, and a second oil distribution ring is provided between the oil outlet hole of the seventh branch oil passage and the stator assembly of the range extender.

Further, the first water passage is arranged in an S shape on the housing of the drive motor.

Further, the oil cooling module further comprises an oil filter arranged between the oil inlet of the oil pump and the housing of the reducer.

The advantages and beneficial effects of the present disclosure are as follows.

In the cooling and lubrication system of the present disclosure, by providing the water cooling module on the housing of the drive motor and the housing of the reducer, and cooling the housing of the drive motor and the housing of the reducer by water which has a large specific heat capacity, the cooling effect is better. Moreover, by providing the oil cooling module in the housing of the drive motor, the housing of the reducer and the housing of the range extender, the components in the hybrid powertrain can be directly lubricated and cooled. In addition, by providing the oil cooler, the water cooling module and the oil cooling module can exchange heat, so that the heat in the hybrid powertrain can be effectively conducted out, thereby reducing the temperature in the hybrid powertrain. The cooling and lubrication system uses an integrated cooling and lubrication means, so the structure of the hybrid powertrain is more compact and occupies less space. Further, the cooling and lubrication system uses the method of pumping oil by an oil pump, so that the lubricating oil can be directly sprayed on the components in the hybrid powertrain for lubrication and cooling, which not only has high cooling and lubrication efficiency, but also can effectively reduce the amount of lubricating oil used and thus reduce the costs.

### BRIEF DESCRIPTION OF DRAWINGS

By reading the detailed description of the preferred embodiments below, various other advantages and benefits will become clear to a person of ordinary skill in the art. The accompanying drawings are only used for the purpose of illustrating the preferred embodiments, and should not be considered as a limitation to the present disclosure. Moreover, throughout the drawings, the same reference numerals are used to denote the same components. In the drawings:
FIG. 1 is a schematic view of the structure of a cooling and lubrication system in an embodiment of the present disclosure;
FIG. 2 is a perspective view of the structure of a water cooling module in an embodiment of the present disclosure;
FIG. 3 is a perspective view of the structure of an oil cooling module in an embodiment of the present disclosure;
FIGS. 4 and 5 are views of positional relationship of a first bearing journal and a second bearing journal in an embodiment of the present disclosure;
FIG. 6 is a positional relationship view of a third bearing journal and a fourth bearing journal in an embodiment of the present disclosure; and
FIG. 7 is a positional relationship view of a fifth bearing journal and a sixth bearing journal in an embodiment of the present disclosure.

In the drawings: 1. water inlet nozzle; 2. first water passage; 3. second water passage; 4. oil cooler; 5. water outlet nozzle; 6. oil pump; 7. first main oil passage; 8. first branch oil passage; 9. second branch oil passage; 10. third branch oil passage; 11. first bearing journal; 12. second bearing journal; 13. third bearing journal; 14. fourth bearing journal; 15. fifth bearing journal; 16. sixth bearing journal; 17. first oil guide groove; 18. second oil guide groove; 19. oil collecting groove; 20. second main oil passage; 21. fourth branch oil passage; 22. fifth branch oil passage; 23. seventh bearing journal; 24. first oil distribution ring; 25. third main oil passage; 26. sixth branch oil passage; 27. seventh branch oil passage; 28. eighth bearing journal; 29. second oil distribution ring; 30. oil filter; 31. bearing pressing plate; 32. oil passage cover plate; 33. central connecting plate.

### DETAILED DESCRIPTION

In order to make the object, technical solutions, and advantages of the present disclosure clearer, the present disclosure will be described clearly and completely in conjunction with the specific embodiments and corresponding drawings. Obviously, the embodiments described are only part of rather than all of the embodiments of the present disclosure. Based on the embodiments in the present disclosure, all other embodiments obtained by those of ordinary skill in the art without paying creative work shall fall within the protection scope of the present disclosure.

The technical solutions provided by various embodiments of the present disclosure will be described in detail with reference to the accompanying drawings.

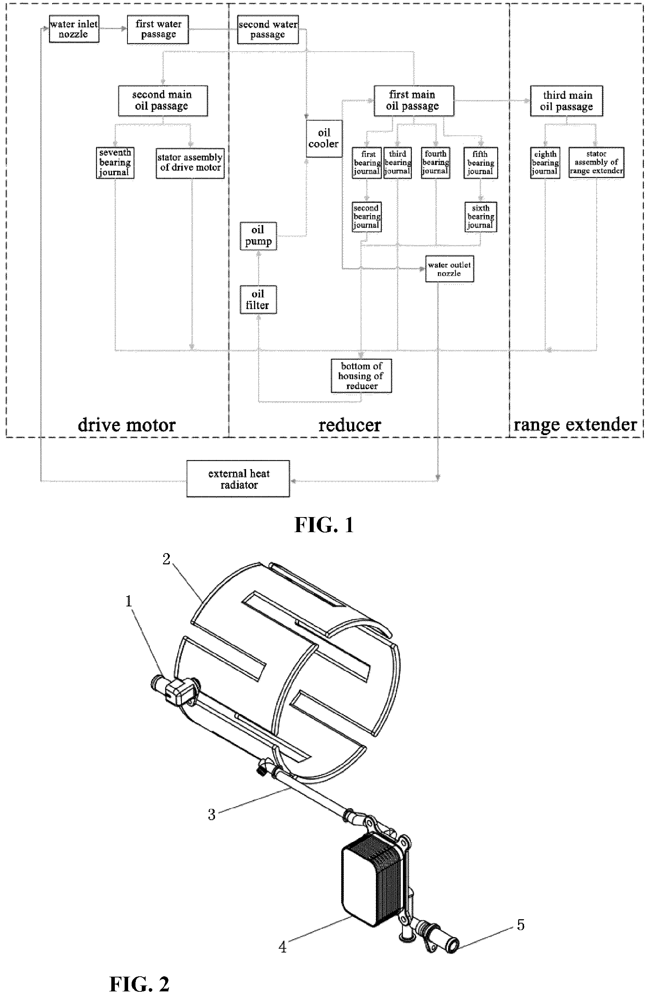

A cooling and lubrication system for a hybrid powertrain is disclosed in an embodiment of the present disclosure. The hybrid powertrain comprises a drive motor, a reducer and a range extender. As shown in FIGS. 1 to 3, the cooling and lubrication system comprises a water cooling module and an oil cooling module.

Specifically, the water cooling module comprises a water inlet nozzle 1, a first water passage 2, a second water passage 3, an oil cooler 4 and a water outlet nozzle 5 connected in sequence. The first water passage 2 is arranged on the housing of the drive motor, and the second water passage 3 is arranged on the housing of the reducer. The water outlet nozzle 5 and the water inlet nozzle 1 are connected to water inlet and outlet ends of an external heat radiator respectively. The water in the water cooling module first cools the housing of the drive motor via the first water passage 2, and then cools the housing of the reducer via the second water passage 3, and then, takes away the heat of the lubricating oil in the oil cooling module by the oil cooler 4, and finally flows into in the external heat radiator and dissipates heat and cools down inside the external radiator. The water after cooled enters the water cooling module again for a new cooling cycle. The first water passage 2 is arranged in an S shape on the housing of the drive motor, so that the contact area between the first water passage 2 and the housing of the drive motor is larger, and the cooling effect is better.

Moreover, the oil cooling module comprises an oil pump 6, a first oil delivery passage, a second oil delivery passage, a third oil delivery passage, a first oil return passage, and a second oil return passage. The oil inlet of the oil pump 6 is communicated with the bottom of the housing of the reducer, and the oil outlet of the oil pump 6 is communicated with the oil cooler 4. The lubricating oil in the oil cooler 4 is delivered into the housing of the reducer via the first oil delivery passage, delivered into the housing of the drive motor via the second oil delivery passage, and delivered into the housing of the range extender via the third oil delivery passage. The first oil return passage is arranged at the bottom of the housing of the drive motor, and the lubricating oil in the housing of the drive motor flows back into the housing of the reducer via the first oil return passage. The second oil return passage is arranged at the bottom of the housing of the range extender, and the lubricating oil in the housing of the range extender flows back into the housing of the reducer via the second oil return passage.

In sum, in the cooling and lubrication system of this embodiment, by providing the water cooling module on the housing of the drive motor and the housing of the reducer, and cooling the housing of the drive motor and the housing of the reducer by water which has a large specific heat capacity, the cooling effect is better. Moreover, by providing the oil cooling module in the housing of the drive motor, the housing of the reducer and the housing of the range extender, the components in the hybrid powertrain can be directly lubricated and cooled. In addition, by providing the oil cooler, the water cooling module and the oil cooling module can exchange heat, so that the heat in the hybrid powertrain can be effectively conducted out, thereby reducing the temperature in the hybrid powertrain. The cooling and lubrication system uses an integrated cooling and lubrication means, so the structure of the hybrid powertrain is more compact and occupies less space. Further, the cooling and lubrication system uses the method of pumping oil by an oil pump, so that the lubricating oil can be directly sprayed on the components in the hybrid powertrain for lubrication and cooling, which not only has high cooling and lubrication efficiency, but also can effectively reduce the amount of lubricating oil used and thus reduce the costs.

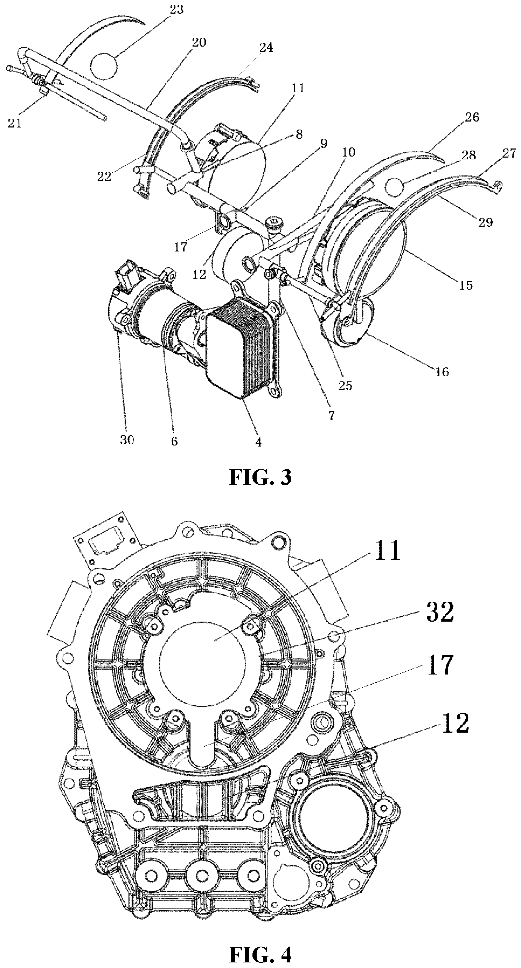

In this embodiment, as shown in FIG. 1 and FIG. 3, the first oil delivery passage comprises a first main oil passage 7, a first branch oil passage 8, a second branch oil passage 9 and a third branch oil passage 10.

The oil inlet end of the first main oil passage 7 is communicated with the oil cooler 4, and the oil outlet end of the first main oil passage 7 is communicated with the first branch oil passage 8, the second branch oil passage 9 and the third branch oil passage 10 respectively. The lubricating oil is delivered to the first bearing journal 11 and the second bearing journal 12 in the housing of the reducer via the first branch oil passage 8, the lubricating oil is delivered to the third bearing journal 13 and the fourth bearing journal 14 in the housing of the reducer via the second branch oil passage 9, and the lubricating oil is delivered to the fifth bearing journal 15 and the sixth bearing journal 16 in the housing of the reducer via the third branch oil passage 10. In this way, the lubricating oil can be directed to the gear shaft to be cooled and lubricated in the housing of the reducer via the first main oil passage 7, the first branch oil passage 8, the second branch oil passage 9 and the third branch oil passage 10, thereby improving the efficiency of cooling and lubrication. In addition, the first main oil passage 7, the first branch oil passage 8, the second branch oil passage 9 and the third branch oil passage 10 are arranged on the housing of the reducer, and the heat on the housing of the reducer can be taken away by the lubricating oil in the first main oil passage 7, the first branch oil passage 8, the second branch oil passage 9 and the third branch oil passage 10.

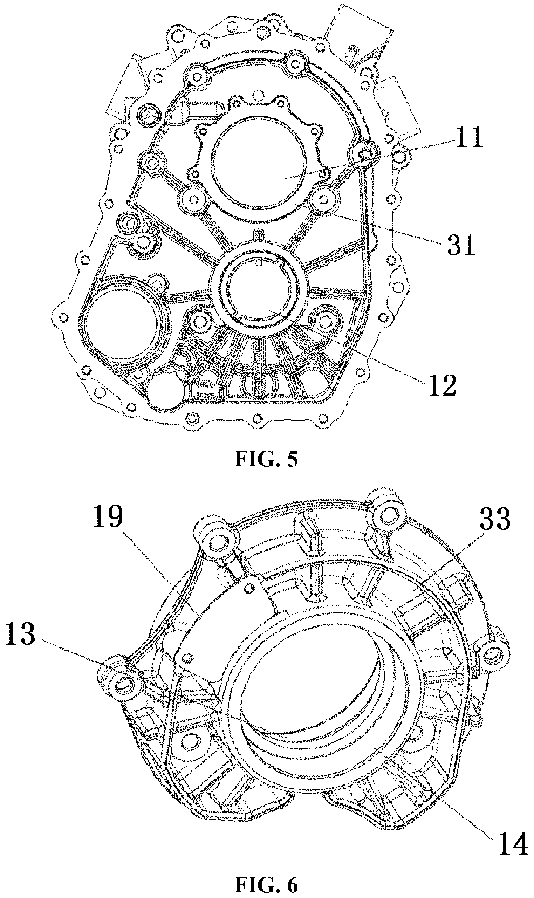

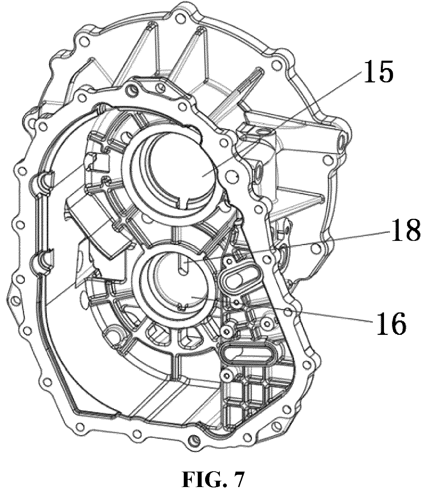

Specifically, as shown in FIGS. 1, 3 to 7, the oil outlet hole of the first branch oil passage 8 is arranged above the first bearing journal 11, the second bearing journal 12 is arranged below the first bearing journal 11, and the first bearing journal 11 and the second bearing journal 12 are communicated via the first oil guide groove 17. Moreover, a bearing pressing plate 31 and an oil passage cover plate 32 are respectively provided on two sides of the first bearing journal 11, so that the lubricating oil entering the first bearing journal 11 is concentrated at the bottom of the first bearing journal 11 by the bearing pressing plate 31 and the oil passage cover plate 32, and the concentrated lubricating oil enters the second bearing journal 12 via the first oil guide groove 17.

The oil outlet hole of the third branch oil passage 10 is arranged above the fifth bearing journal 15, the sixth bearing journal 16 is arranged below the fifth bearing journal 15, and the fifth bearing journal 15 and the sixth bearing journal 16 are communicated via the second oil guide groove 18.

In addition, an oil collecting groove 19 is arranged above the third bearing journal 13 and the fourth bearing journal 14, the oil collecting groove 19 is communicated with the third bearing journal 13 and the fourth bearing journal 14 respectively via the connecting oil passage, and the oil outlet hole of the second branch oil passage 9 is arranged above the oil collecting groove 19. The oil collecting groove 19, the third bearing journal 13 and the fourth bearing journal 14 can be arranged on a central connecting plate 33 in the housing of the reducer.

The flow path of the lubricating oil in the housing of the reducer is as follows. A part of the lubricating oil in the first main oil passage 7 is first delivered to the first bearing journal 11 via the first branch oil passage 8, then flows to the second bearing journal 12 via the first oil guide groove 17, and finally falls back to the bottom of the housing of the reducer. Another part of the lubricating oil in the first main oil passage 7 is first delivered to the oil collecting groove 19 via the second branch oil passage 9, then flows from the oil collecting groove 19 to the third bearing journal 13 and the fourth bearing journal 14, and finally falls back to the bottom of the housing of the reducer. Yet another part of the lubricating oil in the first main oil passage 7 is first delivered to the fifth bearing journal 15 via the third branch oil passage 10, then flows to the sixth bearing journal 16 via the second oil guide groove 18, and finally falls back to the bottom of the housing of the reducer.

In this embodiment, as shown in FIGS. 1 and 3, the second oil delivery passage comprises a second main oil passage 20, a fourth branch oil passage 21, and a fifth branch oil passage 22.

Specifically, the oil inlet end of the second main oil passage 20 is communicated with the oil outlet end of the first main oil passage 7, the oil outlet end of the second main oil passage 20 is respectively communicated with the fourth branch oil passage 21 and the fifth branch oil passage 22, the lubricating oil is delivered to the seventh bearing journal 23 in the housing of the drive motor via the fourth branch oil passage 21, and the lubricating oil is delivered to the stator assembly of the drive motor via the fifth branch oil passage 22. In this way, the lubricating oil can be directed to the gear shaft and stator assembly to be cooled and lubricated in the housing of the drive motor via the second main oil passage 20, the fourth branch oil passage 21 and the fifth branch oil passage 22, thereby improving the efficiency of cooling and lubrication. In addition, the fourth branch oil passage 21 and the fifth branch oil passage 22 are arranged on the housing of the drive motor, and the heat on the housing of the drive motor can be taken away by the lubricating oil in the fourth branch oil passage 21 and the fifth branch oil passage 22, while the second main oil passage 20 is arranged outside the housing of the drive motor by means of an independent oil pipe. Of course, in other implementations, alternatively, the second main oil passage may be arranged on the housing of the drive motor so as to cool the housing of the drive motor. The stator assembly of the drive motor comprises a stator winding and a stator core.

In addition, the fourth branch oil passage 21 and the fifth branch oil passage 22 are both arc-shaped structures, and the oil outlet hole of the fourth branch oil passage 21 and the oil outlet hole of the the fifth branch oil passage 22 are both arranged in a ring shape. The oil outlet hole of the fourth branch oil passage 21 is arranged above the seventh bearing journal 23, and the oil outlet hole of the fifth branch oil passage 22 is arranged above the stator assembly of the drive motor, so that the range of the lubricating oil sprayed by the fourth branch oil passage 21 and the fifth branch oil passage 22 is larger, and the lubrication and cooling range is larger. Moreover, a first oil distribution ring 24 is provided between the oil outlet hole of the fifth branch oil passage 22 and the stator assembly of the drive motor, so that the lubricating oil is distributed more reasonably, and the stator assembly can be evenly cooled.

The flow path of the lubricating oil in the housing of the drive motor is as follows. A part of the lubricating oil in the second main oil passage 20 is first delivered to the seventh bearing journal 23 via the fourth branch oil passage 21, then falls back to the bottom of the housing of the drive motor, and finally flows back into the housing of the reducer via the first oil return passage. Another part of the lubricating oil in the second main oil passage 20 is first delivered to the first oil distribution ring 24 via the fifth branch oil passage 22, then distributed to the stator assembly of the drive motor via the first oil distribution ring 24 and falls back to the bottom of the housing of the drive motor, and finally flows back into the housing of the reducer via the first oil return passage.

In this embodiment, as shown in FIGS. 1 and 3, the third oil delivery passage comprises a third main oil passage 25, a sixth branch oil passage 26 and a seventh branch oil passage 27.

Specifically, the oil inlet end of the third main oil passage 25 is communicated with the oil outlet end of the first main oil passage 7, the oil outlet end of the third main oil passage 25 is communicated with the sixth branch oil passage 26 and the seventh branch oil passage 27 respectively, the lubricating oil is delivered to the eighth bearing journal 28 in the housing of the range extender via the sixth branch oil passage 26, and the lubricating oil is delivered to the stator assembly of the range extender via the seventh branch oil passage 27. In this way, the lubricating oil can be directed to the gear shaft and stator assembly to be cooled and lubricated in the housing of the range extender via the third main oil passage 25, the sixth branch oil passage 26 and the seventh branch oil passage 27, thereby improving the efficiency of cooling and lubrication. Moreover, the third main oil passage 25, the sixth branch oil passage 26 and the seventh branch oil passage 27 are arranged on the housing of the range extender, and the heat on the housing of the range extender can be taken away by the lubricating oil in the third main oil passage 25, the sixth branch oil passage 26 and the seventh branch oil passage 27. The stator assembly of the range extender comprises a stator winding and a stator core.

In addition, the sixth branch oil passage 26 and the seventh branch oil passage 27 are both arc-shaped structures, and the oil outlet hole of the sixth branch oil passage 26 and the oil outlet hole of the seventh branch oil passage 27 are both arranged in a ring shape. The oil outlet hole of the sixth branch oil passage 26 is arranged above the eighth bearing journal 28, and the oil outlet hole of the seventh branch oil passage 27 is arranged above the stator assembly of the range extender. In this way, the range of the lubricating oil sprayed from the sixth branch oil passage 26 and the seventh branch oil passage 27 is larger, and the lubrication and cooling range is larger. Moreover, a second oil distribution ring 29 is provided between the oil outlet hole of the seventh branch oil passage 27 and the stator assembly of the range extender, so that the lubricating oil is distributed more reasonably, and the stator assembly can be evenly cooled.

The flow path of the lubricating oil in the housing of the range extender is as follows. A part of the lubricating oil in the third main oil passage 25 is first delivered to the eighth bearing journal 28 via the sixth branch oil passage 26, then falls back to the bottom of the housing of the range extender, and finally flows back into the housing of the reducer via the second oil return passage. Another part of the lubricating oil in the third main oil passage 25 is first delivered to the second oil distribution ring 29 via the seventh branch oil passage 27, then distributed to the stator assembly of the range extender via the second oil distribution ring 29 and falls back to the bottom of the housing of the range extender, and finally flows back into the housing of the reducer via the second oil return passage.

Further, the oil cooling module also comprises an oil filter 30.

Specifically, the oil filter 30 is arranged between the oil inlet hole of the oil pump 6 and the housing of the reducer for filtering the lubricating oil. In this way, the lubricating oil in the housing of the reducer can be filtered via the oil filter 30 before entering the oil pump 6 to filter out particles in the lubricating oil, and prevent particles from clogging the oil passages and affecting the normal operation of the drive motor, the range extender and the reducer.

The above merely describes particular embodiments of the present disclosure. By the teaching of the present disclosure, a person skilled in the art can make other modifications or variations based on the above embodiments. A person skilled in the art should appreciate that, the detailed description above is only for the purpose of explaining the present disclosure, and the protection scope of the present disclosure should be subject to the protection scope of the claims.

## Claims

1. A cooling and lubrication system for a hybrid powertrain, **characterized in that**:
the hybrid powertrain comprises a drive motor, a reducer and a range extender;
the cooling and lubrication system comprises a water cooling module and an oil cooling module;
the water cooling module comprises a water inlet nozzle (1), a first water passage (2), a second water passage (3), an oil cooler (4) and a water outlet nozzle (5) connected in sequence, the first water passage (2) is arranged on a housing of the drive motor, and the second water passage (3) is arranged on a housing of the reducer;
the oil cooling module comprises an oil pump (6), a first oil delivery passage, a second oil delivery passage, a third oil delivery passage, a first oil return passage and a second oil return passage, an oil inlet of the oil pump (6) is communicated with a bottom of the housing of the reducer, an oil outlet of the oil pump (6) is communicated with the oil cooler (4), the lubricating oil in the oil cooler (4) is delivered into the housing of the reducer, the housing of the drive motor and the housing of the range extender respectively via the first oil delivery passage, the second oil delivery passage and the third oil delivery passage, the first oil return passage is arranged at the bottom of the housing of the drive motor, and the second oil return passage is arranged at the bottom of the housing of the range extender.

2. The cooling and lubrication system for the hybrid powertrain according to claim 1, **characterized in that**: the first oil delivery passage comprises a first main oil passage (7), a first branch oil passage (8), a second branch oil passage (9) and a third branch oil passage (10);
an oil inlet end of the first main oil passage (7) is communicated with the oil cooler (4), an oil outlet end of the first main oil passage (7) is communicated with the first branch oil passage (8), the second branch oil passage (9) and the third branch oil passage (10) respectively, the lubricating oil is delivered to a first bearing journal (11) and a second bearing journal (12) in the housing of the reducer via the first branch oil passage (8), the lubricating oil is delivered to a third bearing journal (13) and a fourth bearing journal (14) in the housing of the reducer via the second branch oil passage (9), and the lubricating oil is delivered to a fifth bearing journal (15) and a sixth bearing journal (16) in the housing of the reducer via the third branch oil passage (10).

3. The cooling and lubricating system for a hybrid powertrain according to claim 2, **characterized in that**: an oil outlet hole of the first branch oil passage (8) is arranged above the first bearing journal (11), the second bearing journal (12) is arranged below the first bearing journal (11), and the first bearing journal (11) and the second bearing journal (12) are communicated via a first oil guide groove (17);
an oil outlet hole of the third branch oil passage (10) is arranged above the fifth bearing journal (15), the sixth bearing journal (16) is arranged below the fifth bearing journal (15), and the fifth bearing journal (15) and the sixth bearing journal (16) are communicated via a second oil guide groove (18).

4. The cooling and lubricating system for a hybrid powertrain according to claim 2, **characterized in that**: an oil collecting groove (19) is arranged above the third bearing journal (13) and the fourth bearing journal (14), the oil collecting groove (19) is communicated with the third bearing journal (13) and the fourth bearing journal (14) respectively via the connecting oil passage, and the oil outlet hole of the second branch oil passage (9) is arranged above the oil collecting groove (19).

5. The cooling and lubricating system for a hybrid powertrain according to claim 2, **characterized in that**: the second oil delivery passage comprises a second main oil passage (20), a fourth branch oil passage (21) and a fifth branch oil passage (22);
an oil inlet end of the second main oil passage (20) is communicated with an oil outlet end of the first main oil passage (7), an oil outlet end of the second main oil passage (20) is communicated with the fourth branch oil passage (21) and the fifth branch oil passage (22) respectively, the lubricating oil is delivered to a seventh bearing journal (23) in the housing of the drive motor via the fourth branch oil passage (21), and the lubricating oil is delivered to the stator assembly of the drive motor via the fifth branch oil passage (22).

6. The cooling and lubricating system for a hybrid powertrain according to claim 5, **characterized in that**: the fourth branch oil passage (21) and the fifth branch oil passage (22) are both arc-shaped structures, an oil outlet hole of the fourth branch oil passage (21) and an oil outlet hole of the fifth branch oil passage (22) are both arranged in a ring shape, an oil outlet hole of the fourth branch oil passage (21) is arranged above the seventh bearing journal (23), an oil outlet hole of the fifth branch oil passage (22) is arranged above the stator assembly of the drive motor, and a first oil distribution ring (24) is provided between the oil outlet hole of the fifth branch oil passage (22) and the stator assembly of the drive motor.

7. The cooling and lubrication system for a hybrid powertrain according to claim 2, **characterized in that**: the third oil delivery passage comprises a third main oil passage (25), a sixth branch oil passage (26) and a seventh branch oil passage (27);
an oil inlet end of the third main oil passage (25) is communicated with an oil outlet end of the first main oil passage (7), an oil outlet end of the third main oil passage (25) is communicated with the sixth branch oil passage (26) and the seventh branch oil passage (27) respectively, the lubricating oil is delivered to a eighth bearing journal (28) in the housing of the range extender via the sixth branch oil passage (26), and the lubricating oil is delivered to the stator assembly of the range extender via the seventh branch oil passage (27).

8. The cooling and lubricating system for a hybrid powertrain according to claim 7, **characterized in that**: the sixth branch oil passage (26) and the seventh branch oil passage (27) are both arc-shaped structures, an oil outlet hole of the sixth branch oil passage (26) and an oil outlet hole of the seventh branch oil passage (27) are both arranged in a ring shape, the oil outlet hole of the sixth branch oil passage (26) is arranged above the eighth bearing journal (28), the oil outlet hole of the seventh branch oil passage (27) is arranged above the stator assembly of the range extender, and a second oil distribution ring (29) is provided between the oil outlet hole of the seventh branch oil passage (27) and the stator assembly of the range extender.

9. The cooling and lubricating system for a hybrid powertrain according to any one of claims 1 to 8, **characterized in that**: the first water passage (2) is arranged in an S shape on the housing of the drive motor.

10. The cooling and lubricating system for a hybrid powertrain according to any one of claims 1 to 8, **characterized in that**: the oil cooling module further comprises an oil filter (30) arranged between the oil inlet of the oil pump (6) and the housing of the reducer.
